# EUROPEAN PATENT APPLICATION

(11) **EP 1 239 272 A2**
(43) Date of publication of application: **11.09.2002**
(21) Application number: 02004945.8
(22) Date of filing: 05.03.2002
(51) Int. Cl.: G01J 9/00

(54) **Tunable filter with wavelength monitor**

(30) Priority: 09.03.2001 JP 2001066689
(71) Applicant: Ando Electric Co., Ltd., Tokyo (JP)
(72) Inventor: Asami, Keisuke, c/o Ando Electric Co., LTD., Tokyo (JP); Ito, Tomoo, c/o Ando Electric Co., LTD., Tokyo (JP)
(74) Representative: Grünecker, Kinkeldey, Stockmair & Schwanhäusser Anwaltssozietät

(57) **Abstract**

There is provided a tunable filter with a wavelength monitor, that comprises a wavelength selector 3, a separator for separating a part of a transmitted light beam or a reflected light beam when a wavelength is swept by the wavelength selector, and a monitor 6 for monitoring a part of the separated light beam.

## Description

### BACKGROUND OF THE INVENTION

### 1. Field of the Invention

The present invention relates to a tunable filter capable of selectively outputting an input light beam having a predetermined wavelength.

### 2. Description of the Related Art

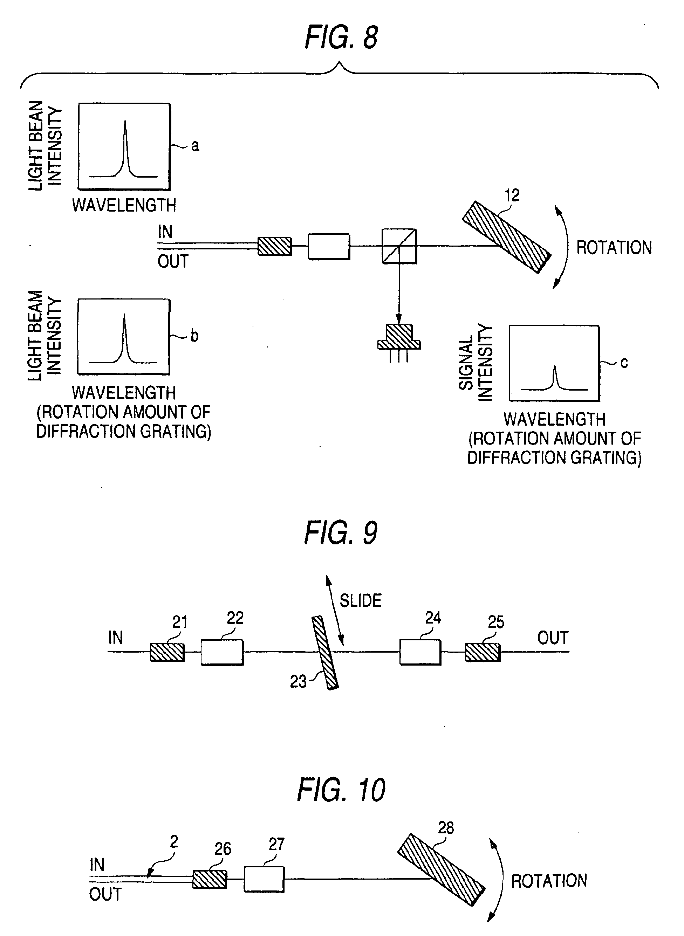

Fig. 9 shows a conventional tunable filter that can selectively output an input light beam having a predetermined wavelength.

Numeral 21 is an input side optical fiber. An input light beam is input into a bandpass filter 23 via a condensing lens 22.

An output light beam from the bandpass filter 23 is supplied to an output side optical fiber 25 via an output side condensing lens 24.

Adielectric film whose thickness is changed in the arrowed direction as shown in FIG.9 is coated on a surface into which the light beam from the bandpass filter 23 is input.

Thebandpass filter 23 is slidable in the arroweddirection in FIG.9, and can select the wavelength of the to-be-passed light beam by adjusting a thickness of the surface, onto which the incident light beam is irradiated, of the dielectric film.

Fig. 10 shows another tunable filter that can selectively output an input light beam having a predetermined wavelength.

Numeral 26 is a two-core optical fiber, and can pass the input light beam and the output light beam.

A condensing lens 27 is provided commonly to the input light beam and the output light beam, and inputs the light beam in a diffraction grating 28 and outputs the output light beam having the selected wavelength to the output side of the two-core fiber.

The diffraction grating 28 is rotatable in the arrowed direction of FIG.10, and can select the wavelength of the diffracted light beam by adjusting an angle of the diffraction grating onto which the input light beam is irradiated.

In the conventional tunable filters shown in FIG.9 and FIG.10, the wavelength of the to-be-output light beam can be selected by either sliding the bandpass filter or rotating the diffraction grating, but a means for detecting which wavelength of the light beam that is being output is not provided.

Therefore, there is a problem that, since the tunable filter has no wavelength information, it takes much time to provide the tunable filter unless the wavelength of the light beam source is grasped in advance.

### SUMMARY OF THE INVENTION

In order to overcome the above problems, there is provided a tunable filter with a wavelength monitor comprising:
a wavelength selector, a separator for separating a part of a transmitted light beam or a reflected light beam when a wavelength is swept by the wavelength selector, and a monitor for monitoring a part of a separated light beam. Thus, it is possible to obtain wavelength information of a light beam source.

The separator can get a part of a light beam, which is to be monitored, from the reflected light beam of the light beam input from the wavelength selector. In this case, the wavelength of the light beam to be monitored is the wavelength in vicinity of the wavelength that is selected by the filter.

The separator can separate a part of a light beam, which is to be monitored, from an output light beam of the wavelength selector by an optical coupler. In this case, the wavelength of the light beam to be monitored is the wavelength that is selected by the filter.

The separator can separate a part of a light beam, which is to be monitored, from an output light beam of the wavelength selector by a beam splitter. In this case, the wavelength of the light beam to be monitored is the wavelength that is selected by the filter.

The wavelength selector can be constructed as a bandpass filter that can be slid in a direction along which a thickness of a dielectric film is changed.

The wavelength selector can be constructed as a diffraction grating whose angle to an incident light beam can be adjusted.

Since the tunable filter with a wavelength monitor further comprises a reflector for reflecting an output light beam from the wavelength selector, and the reflected light beam from the reflector is input again into the wavelength selector. Thus, since the input light beam is passed through the bandpass filter or the diffraction grating serving as the wavelength selector twice, the bandwidth to be selected can be further narrowed.

Also, since a two-core fiber through which an input light beam and an output light beam are passed respectively is employed, the device can be miniaturized.

Also, since the monitor is constructed by a photodiode, it is possible to monitor the wavelength with a simple structure.

### BRIEF DESCRIPTION OF THE DRAWINGS

Fig.1 is a view showing a structure of a first tunable filter with a wavelength monitor.

Fig.2 is a view showing a structure of a second tunable filter with a wavelength monitor.

Fig.3 is a view showing a structure of a third tunable filter with a wavelength monitor.

Fig.4 is a view showing a structure of a fourth tunable filter with a wavelength monitor.

Fig. 5 is a view showing a structure of a fifth tunable filter with a wavelength monitor.

A view illustrating waveforms in operation of the first tunable filter with the wavelength monitor.

Fig.7 is a view illustrating waveforms in operation of the second tunable filter with the wavelength monitor.

Fig. 8 is a view illustrating waveforms in operation of the fourth tunable filter with the wavelength monitor.

FIG.9 is a view showing a structure of a tunable filter in the related art.

FIG.10 is a view showing a structure of another tunable filter in the related art.

### DETAILED DESCRITPTION OF THE PRESENT INVENTION

Next, embodiments of the present invention will be explained with reference to the drawings hereinafter.

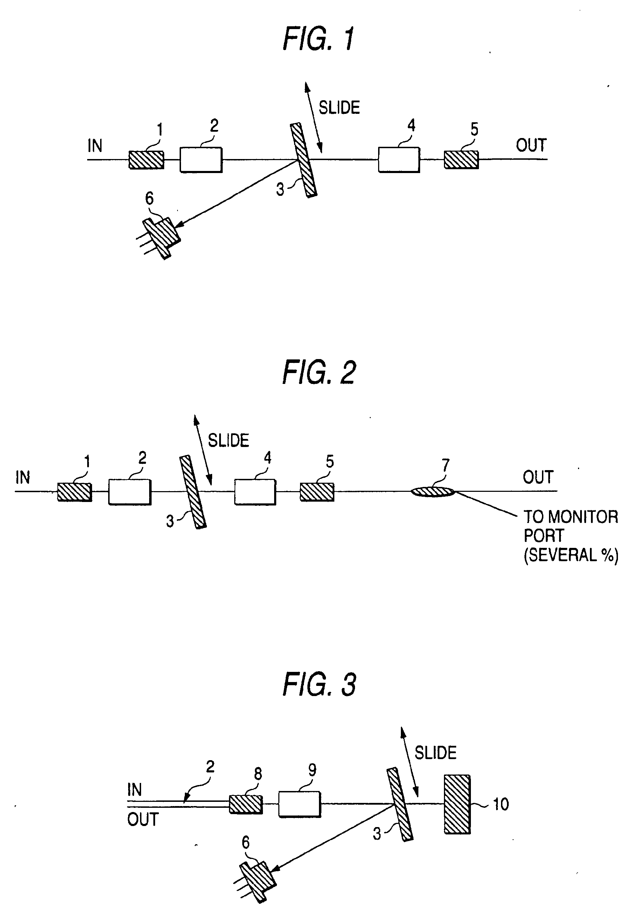

FIG.1 is a view showing a structure of a first tunable filter with a wavelength monitor.

Numeral 1 is an input side optical fiber. An input light beamis input into abandpass filter 3 via an input side condensing lens 2.

An output light beam from the bandpass filter 3 is supplied to an output side optical fiber 5 via an output side condensing lens 4.

A dielectric film whose thickness is changed in the arrowed direction in FIG.1 is coated on a surface into which the light beam from the bandpass filter 3 is input.

The bandpass filter 3 is slidable in the arrowed direction in FIG.1, and can select the wavelength of the to-be-passed light beam by adjusting a thickness of the surface, onto which the incident light beam is irradiated, of the dielectric film.

Numeral 6 is a wavelength monitor including a photodiode (PD).

Out of the input light beam, a light beam having a wavelength in the vicinity of the wavelength that is selectively transmitted through the bandpass filter 3 to output is reflected by the bandpass filter 3 and then is received by the photodiode (PD).

If a diameter of the light beam receiving portion of the photodiode (PD) is small, the condensing lens must be provided.

The wavelength of the light beam that is detected by the photodiode (PD) is the wavelength in vicinity of the light beam that is transmitted through the bandpass filter 3. If the relationship between a slide amount of the bandpass filter and the wavelength of the output light beam is measured previously and stored in a table, it is possible to decide which wavelength of the light beam is being output.

FIG.2 is a view showing a structure of a second tunable filter with a wavelength monitor.

Numeral 1 is an input side optical fiber. The input light beam is input into the bandpass filter 3 via the input side condensing lens 2.

The output light beam is supplied from the bandpass filter 3 to the output side optical fiber 5 via the output side condensing lens 4.

The dielectric film whose thickness is changed in the arrowed direction of FIG.2 is coated on the surface into which the light beam from the bandpass filter 3 is input.

The bandpass filter 3 is slidable in the arrowed direction of FIG.2, and can select the wavelength of the to-be-passed light beam by adjusting the thickness of the surface, onto which the incident light beam is irradiated, of the dielectric film.

In addition, an optical coupler 7 for branching the output light beam from the output side optical fiber 5 is provided in FIG.2. The light beam that is branched from the optical coupler 7 by several % is supplied to a monitor port such as the photodiode (PD) in FIG.1 such that the output light beam can be monitored.

In this case, the light beam to be monitored has the selected wavelength of the output light beam that is transmitted through the bandpass filter 3.

The wavelength of the light beam that is detected by the photodiode (PD) is the wavelength of the light beam that is transmitted through the bandpass filter 3. If the relationship between the slide amount of the bandpass filter and the wavelength of the output light beam is measured previously and stored in the table, it is possible to decide which wavelength of the light beam is being output.

FIG.3 is a view showing a structure of a third tunable filter with a wavelength monitor.

Numeral 8 is a two-core fiber in which the input side optical fiber and the output side optical fiber are incorporated.

Numeral 9 is a condensing lens that is common to the input side and the output side, and inputs the input light beam into the bandpass filter 3 and supplies the output light beam from the bandpass filter 3 to the output side optical fiber.

The dielectric film whose thickness is changed in the arrowed direction of FIG.3 is coated on the surface into which the light beam from the bandpass filter 3 is input.

The bandpass filter 3 is slidable in the arrowed direction in FIG.3, and can select the wavelength of the to-be-passed light beam by adjusting the thickness of the surface, onto which the incident light beam is irradiated, of the dielectric film.

In FIG.3, the light beam that is transmitted through the bandpass filter 3 is reflected by a mirror 10 and then transmitted through the bandpass filter 3 once again.

Since the light beam is transmitted through the bandpass filter 3 twice, the selectivity of the wavelength (the narrower identification of the bandwidth) can be further enhanced.

Numeral 6 is a wavelength monitor including the photodiode (PD).

Out of the input light beam, the light beam having the wavelength in vicinity of the wavelength, which is transmitted selectively for the first time and output, is reflected by the bandpass filter 3 and then received by the photodiode (PD).

In this case, if a diameter of the light beam receiving portion of the photodiode (PD) is small, the condensing lens must be provided.

The wavelength of the light beam that is detected by the photodiode (PD) is the wavelength of the light beam that is transmitted through the bandpass filter 3. If the relationship between a variable amount of the bandpass filter and the wavelength of the output light beam is measured previously and stored in the table, it is possible to decide which wavelength of the light beam is being output.

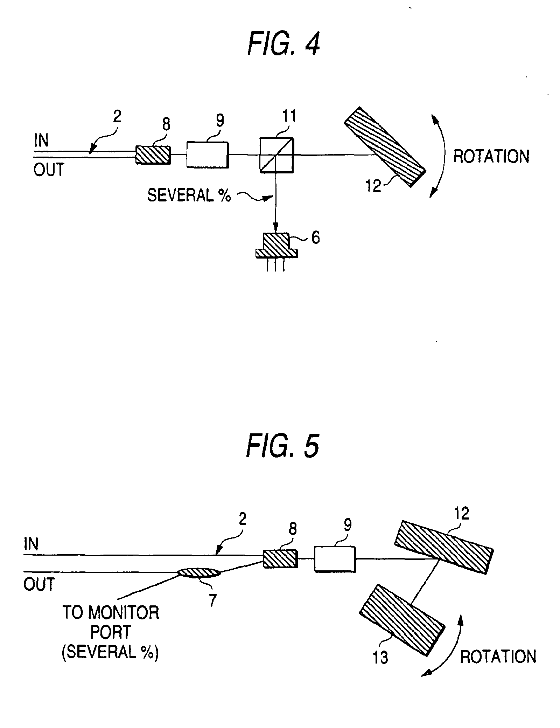

FIG.4 is a view showing a structure of a fourth tunable filter with a wavelength monitor.

Numeral 8 is the two-core fiber that contains the input side optical fiber and the output side optical fiber.

Numeral 9 is the condensing lens that is common to the input side and the output side, and irradiates the input light beam to a diffraction grating 12 via a beam splitter 11 whose branching ratio is variable.

The diffraction grating 12 is rotatable in the arrowed direction of FIG.4, and can select the wavelength, that is reflected to the beam splitter 11, by adjusting its angle to the input light beam.

Most of the output light beam that is reflected selectively by the diffraction grating 12 is passed through the beam splitter 11 and then fed to the output side optical fiber of the two-core fiber 8 via the condensing lens 9.

The beam splitter 11 is constructed such that the light beam from the diffraction grating 12 is supplied to the photodiode (PD) by several % and is monitored.

The wavelength of the light beam that is detected by the photodiode (PD) is the wavelength of the light beam that is diffracted selectively by the diffraction grating 12. If the relationship between a rotation amount of the diffraction grating and the wavelength of the output light beam is measured previously and stored in the table, it is possible to decide which wavelength of the light beam is being output.

FIG.5 is a view showing a structure of a fifth tunable filter with a wavelength monitor.

Numeral 8 is a two-core fiber that contains an input side optical fiber and output side optical fiber.

Numeral 9 is a condensing lens that is common to the input side and the output side, and irradiates the input light beam onto the diffraction grating 12.

Numeral 13 is a mirror that is rotatable in the arrowed direction of FIG.5. The mirror 13 can select the wavelength by adjusting its angle to the input light beam.

If the output light beam that is reflected by the diffraction grating 12 is irradiated onto the diffraction grating 12 once again by the mirror 13, the selectivity of the wavelength (the narrower identification of the bandwidth) can be further enhanced.

The optical coupler 7 for branching the output light beam from the output side optical fiber is provided in FIG.5. The light beam that is branched from the optical coupler 7 by several % is supplied to the monitor port such as the photodiode (PD) in FIG.1 such that the output light beam can be monitored.

In this case, the light beam to be monitored has the selected wavelength of the output light beam that is transmitted through the bandpass filter 3.

The wavelength of the light beam that is detected by the photodiode (PD) is the wavelength of the light beam that is diffracted selectively by the diffraction grating. If the relationship between a rotation amount of the mirror and the wavelength of the output light beam is measured previously and stored in the table, it is possible to decide which wavelength of the light beam is being output.

Next, the relationship between the wavelength of the input light beam and the wavelength of the light beam monitored by the photodiode (PD) in respective embodiments of the present invention will be explained with reference to the figures hereunder.

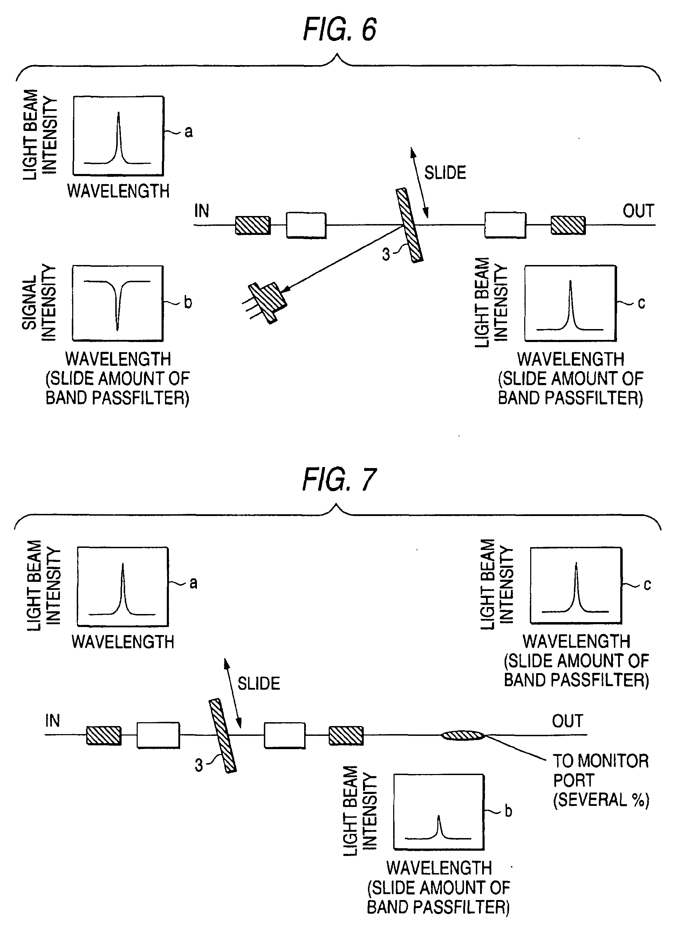

FIG.6 is a view illustrating waveforms in operation of the first tunable filter with the wavelength monitor shown in FIG.1.

"a" is a view showing the relationship between the wavelength of the input light beam and its light beam intensity.

"b" is a view showing the relationship between the wavelength (the slide amount of the bandpass filter 3) of the light beam being monitored by the photodiode (PD) and a signal intensity when the bandpass filter 3 is slid.

"c" is a view showing the light beam intensity of the output light beam in connection with the slide amount of the bandpass filter 3 when the bandpass filter 3 is slid.

FIG.7 is a view illustrating waveforms in operation of the second tunable filter with the wavelength monitor.

"a" is a view showing the relationship between the wavelength of the input light beam and the light beam intensity.

"b" is a view showing the wavelength (the slide amount of the bandpass filter 3) of the light beam being monitored by the monitor port and the signal intensity when the bandpass filter 3 is slid.

"c" is a view showing the light beam intensity of the output light beam in connection with the slide amount of the bandpass filter 3 when the bandpass filter 3 is slid.

FIG.8 is a view illustrating waveforms in operation of the fourth tunable filter with the wavelength monitor shown in FIG.4.

"a" is a view showing the relationship between the wavelength of the input light beam and the light beam intensity.

"b" is a view showing the relationship between the wavelength (rotation amount of the diffraction grating 12) of the light beam being monitored by the photodiode (PD) and the signal intensity when the diffraction grating 12 is rotated.

"c" is a view showing the light beam intensity of the output light beam in connection with the rotation amount of the diffraction grating 12 when the diffraction grating 12 is rotated.

As described above, since the wavelength monitoring function is added to the tunable filter, a part of the light beam being transmitted or reflected when the filter is swept can be monitored and thus wavelength information of the input light beam can be obtained from the monitored signal.

Also, the tunable filter of the present invention can be employed as the tunable filter that is capable of setting automatically the selected wavelength of the filter to the wavelength of the input light beam based on the resultant wavelength information.

In addition, if the wavelength information (the simplified optical spectrum) is caused to display on the display device from the monitor, the tunable filter of the present invention can be employed as the simplified wavemeter or the simplified optical spectrum analyzer.

According to the invention, a tunable filter with a wavelength monitor comprising a wavelength selector, a separator for separating a part of a transmitted light beam or a reflected light beam when a wavelength is swept by the wavelength selector, and a monitor for monitoring a part of a separated light beam. Therefore, it is possible to obtain wavelength information of the light beam source.

In the invention, the separator can get a part of a light beam, which is to be monitored, from the reflected light beam of the light beam input from the wavelength selector. In this case, the wavelength of the light beam to be monitored is the wavelength in vicinity of the wavelength that is selected by the filter.

In the invention, the separator can separate a part of a light beam, which is to be monitored, from an output light beam of the wavelength selector by an optical coupler. In this case, the wavelength of the light beam to be monitored is the wavelength that is selected by the filter.

In the invention, the separator can separate a part of a light beam, which is to be monitored, from an output light beam of the wavelength selector by a beam splitter. In this case, the wavelength of the light beam to be monitored is the wavelength that is selected by the filter.

In the invention, the wavelength selector can be constructed as a bandpass filter that can be slid in a direction along which a thickness of a dielectric film is changed.

In the invention, the wavelength selector includes a diffraction grating whose angle to an incident light beam can be adjusted.

In the invention, a tunable filter with a wavelength monitor further comprises a reflector for reflecting an output light beam from the wavelength selector, and the reflected light beam from the reflector is input again into the wavelength selector. Thus, since the input light beam is passed through the bandpass filter or the diffraction grating serving as the wavelength selector twice, the bandwidth to be selected can be further narrowed.

In the invention, since a two-core fiber through which an input light beam and an output light beam are passed respectively is employed, the device can be miniaturized.

In the invention, since the monitor is constructed by a photodiode, it is possible to monitor the wavelength with a simple structure.

## Claims

1. A tunable filter with a wavelength monitor comprising:
a light input for emitting a input light beam;
a wavelength selector for selecting a light beam having a predetermined wavelength from the input light beam; and
a monitor for monitoring a part of the input light beam or the selected light beam.

2. The tunable filter according to claim 1, wherein the wavelength selector reflects the input light beam; and
the monitor monitors the input light beam reflected by the wavelength selector.

3. The tunable filter according to claim 2, wherein the wavelength selector reflects the input light beam having a wavelength in the vicinity of the predetermined wavelength.

4. The tunable filter according to claim 1, further comprising a separator for separating a light beam from an output light beam from the wavelength selector,
wherein the monitor monitors the separated light beam from the separator.

5. The tunable filter according to claim 1, wherein the separator is an optical coupler.

6. The tunable filter according to claim 1, wherein the separator is a beam splitter.

7. The tunable filter with according to claim 1,
wherein the wavelength selector includes a slidable bandpass filter in a direction along which a thickness of a dielectric film is changed.

8. The tunable filter, according to claim 1, wherein the wavelength selector includes a diffraction grating whose angle to an incident light beam is adjustable.

9. The tunable filter according to claim 1, further comprising:
a reflector for reflecting an output light beam from the wavelength selector; and
wherein the reflected light beam from the reflector is input again into the wavelength selector.

10. The tunable filter according to claim 1, wherein a two-core fiber through which an input light beam and an output light beam are passed respectively is employed.

11. The tunable filter according to claim 1, wherein the monitor includes a photodiode.
